# DEMANDE DE BREVET EUROPEEN

(11) **EP 2 093 989 A1**
(43) Date de publication de la demande: **26.08.2009**
(21) Numéro de dépôt: 08305601.0
(22) Date de dépôt: 26.09.2008
(51) Int. Cl.: H04M 17/00

(54) **Procede de communication d'information pour abonnes de services prepayes**

(30) Priorité: 28.09.2007 FR 0706821
(71) Demandeur: Alcatel Lucent, 75008 Paris (FR)
(72) Inventeur: Huguet, William, 75005, PARIS (FR); Toure, Famory, 91300, MASSY (FR); Reynes, François, 44880, SAUTRON (FR)
(74) Mandataire: Hedarchet, Stéphane

(57) **Abrégé**

Procédé permettant à un terminal de communication mobile (1) appartenant au réseau d'un opérateur d'accéder à un service tel que push mail, ce procédé comprenant une étape de création d'une requête du terminal de communication mobile (1) à destination d'un serveur de paiement (2), une étape d'identification de ce terminal (1) et du service requis par ce terminal, une étape d'interrogation d'une base de données utilisateurs (3) afin de déterminer si le terminal identifié bénéficie du prépaiement pour le service requis, et une étape d'envoi au terminal mobile (1) d'au moins une information relative au compte de l'utilisateur pour le service prépayé requis, ce procédé étant **caractérisé en ce que** la communication entre le terminal (1) et le serveur de paiement (2) est réalisée suivant un protocole HTTP, le serveur de paiement (2) interrogeant ladite base de données (3) et transmettant les informations relatives au compte de l'utilisateur en langage XML.

## Description

L'invention se rapporte au domaine technique des télécommunications.

L'invention s'applique en particulier à la communication d'informations destinées à être visualisées sur un terminal de communication mobile.

Les services prépayés, par exemple « *push mail* » se sont développés, en particulier à destination de certains utilisateurs de terminaux mobiles pour lesquels l'utilisation du terminal est contrôlé: enfants, employés utilisant des terminaux d'entreprise par exemple.

Un utilisateur d'un service prépayé ne peut accéder au service qu'après contrôle de son état de compte, cet état de compte devant être actualisé en temps réel.

Par exemple, l'utilisateur adresse une requête à un centre de commutation des systèmes mobiles MSC (*Mobile Switching Center*). Le centre de commutation adresse alors une requête à une plateforme à prépaiement qui, en réponse, indique si l'état du compte de l'utilisateur lui permet d'accéder au service demandé. Les requêtes et réponses utilisent conventionnellement le protocole de signalisation SS7. Lorsque la réponse est positive, le centre de commutation connecte l'utilisateur au service demandé.

Le document WO-2004/010393 décrit un dispositif de taxation en temps réel de services prépayés, permettant l'accès à des plateformes utilisant différents protocoles SS7.

Un procédé d'accès prépayé et anonyme à Internet est proposé dans le document FR-2817056, ce procédé permettant de réaliser des achats sur Internet ou de consulter des sites payant en réalisant un débit du temps de connexion prépayé correspondant au montant de l'achat ou de la consultation sur le site payant.

Le document WO-2007/001231 décrit un réseau 3GPP comprenant un serveur AAA permettant le contrôle en temps réel du crédit restant pour l'accès à un service prépayé.

Dans l'état de la technique, plusieurs méthodes ont été proposées pour que les utilisateurs de terminaux mobiles abonnés de services prépayés puissent être informés du solde de leur compte ou disposer d'un suivi de facturation.

Dans une première approche, des informations de consommation sont fournies par une page WAP (*Wireless Application Protocol*). Cette approche n'est pas satisfaisante, compte tenu des limitations de la technologie WAP, en particulier en termes de vitesse d'accès. Les services WAP ne rencontrent d'ailleurs pas le succès escompté (Hung et al, Critical factors of WAP services adoption : an empirical study, Electronic Commerce Reasearch and Applications 2, 2003, pp. 42-60).

Dans une deuxième approche, l'utilisateur compose un numéro spécifique lui permettant de réapprovisionner son compte. Cette approche n'est pas satisfaisante : seules les données relatives au compte peuvent être modifiées (par exemple adresse électronique).

Dans une troisième approche, la norme USSD (*Unstructured Supplementary Service Data*) des terminaux GSM est utilisée. Par exemple, la société Orange propose aux utilisateurs de terminaux le service #123# pour le suivi de facturation. Cette approche n'est pas satisfaisante : elle dépend de l'opérateur et repose sur un protocole SS7.

Dans une quatrième approche, le suivi de facturation est effectué par le service de messagerie SMS (*Short Message Service*). Cette approche présente les mêmes inconvénients que l'emploi de la norme USSD, avec une interactivité plus faible.

Il a également été proposé d'employer le protocole de communication STK (*Sim Tool Kit*).

L'invention vise à fournir des outils ergonomiques de *self care* pour les abonnés de services prépayés, ces outils assurant un haut niveau d'interactivité et permettant aux abonnés de suivre leur consommation, de consulter le solde de leur compte, et de modifier en temps réel leurs données personnelles.

Ces outils de self care doivent permettre de diminuer le coût de gestion des abonnés de services prépayés. Ces outils doivent également concourir à une plus grande fidélisation des clients. La mise en oeuvre de ces outils doit en effet permettre aux abonnés de suivre leur consommation en temps réel, sans solliciter de conseiller client, sans interroger un serveur vocal et sans utiliser de moyens à faible interactivité (interface web ou wap, email).

A ces fins, l'invention se rapporte, selon un premier aspect, à un procédé permettant à un terminal de communication mobile appartenant au réseau d'un opérateur d'accéder à un service tel que push mail, ce procédé comprenant une étape de création d'une requête du terminal de communication mobile à destination d'un serveur de paiement, une étape d'identification de ce terminal et du service requis par ce terminal, une étape d'interrogation d'une base de données utilisateurs afin de déterminer si le terminal identifié bénéficie du prépaiement pour le service requis, et une étape d'envoi au terminal mobile d'au moins une information relative au compte de l'utilisateur pour le service prépayé requis, la communication entre le terminal et le serveur de paiement étant réalisée suivant un protocole http(s), le serveur de paiement interrogeant ladite base de données et transmettant les informations relatives au compte de l'utilisateur en langage XML.

Avantageusement, le procédé comprend une étape de modification d'au moins une donnée relative au compte de l'utilisateur, cette étape de modification comprenant l'envoi par le terminal utilisateur d'une requête http(s) au serveur de paiement.

Avantageusement, la donnée relative au compte de l'utilisateur est choisie parmi le groupe comprenant l'adresse électronique de l'utilisateur, un mot de passe, l'historique des opérations effectuées sur le compte (réapprovisionnement, bonus, consommations).

L'invention se rapporte, selon un deuxième aspect, à un système de communication, comprenant un terminal de communication mobile appartenant au réseau d'un opérateur, un serveur de paiement et une base de données utilisateurs, le terminal comprenant des moyens de création d'une requête à destination dudit serveur de paiement, le serveur comprenant des moyens d'identification de ce terminal et d'un service prépayé requis par ce terminal, le serveur comprenant en outre des moyens d'interrogation de la base de données utilisateurs afin de déterminer si le terminal identifié bénéficie du prépaiement pour le service requis, le serveur comprenant des moyens d'envoi au terminal mobile d'au moins une information relative au compte de l'utilisateur pour le service prépayé requis, la communication entre le terminal et le serveur de paiement étant réalisée suivant un protocole http(s), le serveur de paiement interrogeant ladite base de données et transmettant les informations relatives au compte de l'utilisateur en langage XML.

L'invention se rapporte, selon un troisième aspect, à un produit programme d'ordinateur destiné à être stocké en mémoire d'un terminal de communication mobile et/ou stocké sur un support mémoire lisible par un lecteur d'un terminal mobile, et/ou téléchargeable sur un terminal de communication mobile via un serveur distant, ce programme contenant des instructions pour la mise en oeuvre du procédé présenté ci-dessus.

D'autres objets et avantages de l'invention apparaîtront à la lumière de la description faite ci-après de modes de réalisations actuellement préférés, description qui va être réalisée en se référant au dessin annexé qui est une vue schématique d'un scénario de session entre un terminal de communication, un serveur de paiement une base de données utilisateurs.

Le terminal 1 de l'abonné est par exemple un terminal mobile muni de fonctionnalités de messagerie électronique, par exemple du type commercialisé sous la marque Blackberry Pearl.

Ce terminal 1 établit une session de communication avec un serveur de paiement 2. Cette session est établie par une requête HTTP GET.

Un exemple de requête est donné ci-dessous :
http(s)://server2/method=val1&parameter1=val2...&parametern=valn

Le serveur de paiement 2 interroge une base de données utilisateurs 3, ou une base de données d'évènements 4.

Le serveur 2 transforme les données obtenues des bases 3, 4 pour les adresser dans un format supporté par le terminal 1.

Les réponses du serveur 2 sont obtenues en langage XML *(eXtensible Markup Language).*

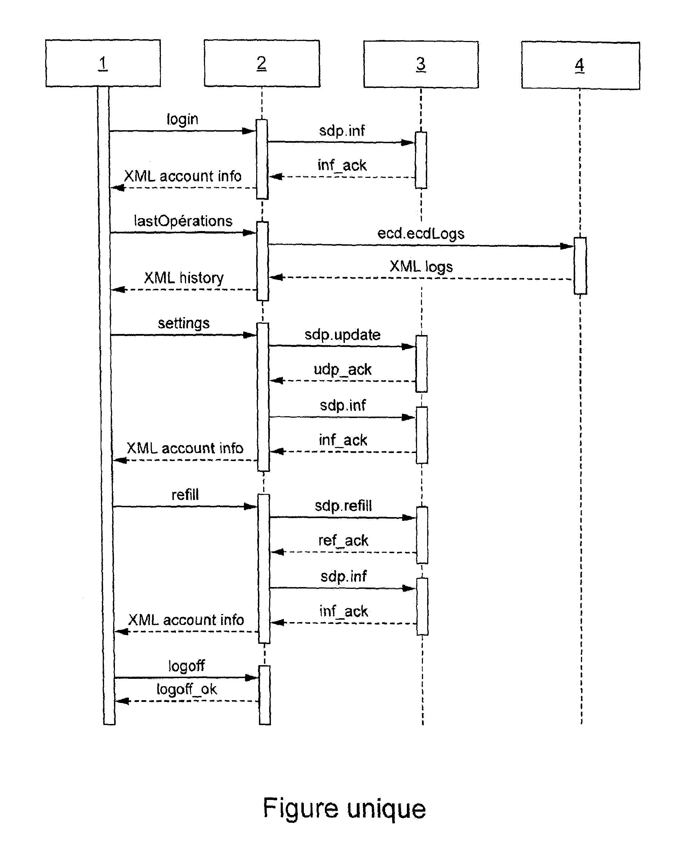

Un exemple de scénario est donné en figure 1.

Une session est créée par le message
method=login&msisdn=val1&password=val2

Une chaîne de caractères XML est obtenue en réponse.

```
 <inobj_inf_ack>
  <rbonusin>Bonus information</rbonusin>
  <rcurstat>Account status (Active, Inactive, Deactivated)</rcurstat>
  <remail>Email address</remail>
  <rmsisdn>MSISDN</rmsisdn>
  <rpwdtot>Number of wrong password attempts</rpwdtot>
  <rremainc>Remaining credit</rremainc>
  <rtmc>End of activity period</rtmc>
  <rtr>End of validity period</rtr>
  <status_a>Account status (validated, activated, exhausted, etc)</status_a>
  <status_r>Request status (OK, NOK)</status_r>
 </inobj_inf_ack>
```

Pour une modification d'adresse électronique ou de mot de passe, le terminal 1 adresse le message suivant.
method=settings&msisdn=val1[&email=val2][&password=val3&confirm=val4]

Une chaîne de caractères XML est obtenue en réponse.
inobj_inf_ack.

Pour un réapprovisionnement de compte, le terminal adresse le message suivant.
method=refill&msisdn=val1&scratch=val2

Une chaîne de caractères XML est obtenue en réponse:
inobj_inf_ack

Pour obtenir un suivi de consommation (dernières opérations, réapprovisionnements, bonus), le message suivant est adressé par le terminal.
method=lastOperations&msisdn=val1

Une chaîne de caractères XML est obtenue en réponse:

```
 <History>
  <cdr>
   <date>Date of the operation</date>
   <credit>Remaining credit</credit>
   <gprs_data_volume>GPRS data volume consumed</gprs_data_volume>
   <scratch_card_number>Scratch card used for the refill
 operation</scratch_card_number>
   <main_amount1>Amount refilled on the main account</main_amount1>
   <emiles>Bonus allocated</emiles>
  </cdr>
 </History>
```

Pour fermer la session, le message suivant est adressé par le terminal.
method=logoff&msisdn=val1

L'invention présente de nombreux avantages.

En premier lieu, la mise en place d'une application self care embarquée dans le terminal de communication permet de s'affranchir des caractéristiques du réseau de l'opérateur pour le suivi de la consommation de services.

De plus, seules les informations réellement pertinentes sont affichées sur le terminal, avec une adaptations aux performances de ce terminal (notamment taille d'écran). Les informations utiles sont donc obtenues plus rapidement et plus lisiblement que par la mise en oeuvre des techniques antérieures, en particulier WAP.

La mise en place d'un programme embarqué dans le terminal permet à l'opérateur d'offrir des services plus faciles d'utilisation. Par exemple, lorsque l'abonné souhaite recharger son compte, il peut utiliser sa carte de crédit dont le numéro est mémorisé dans le terminal.

## Revendications

1. Procédé permettant à un terminal de communication mobile (1) appartenant au réseau d'un opérateur d'accéder et modifier des données relatives à un compte dans un service prépayé supporté par ledit réseau, ce procédé comprenant une étape de création d'une requête du terminal de communication mobile (1) à destination d'un serveur de paiement (2), une étape d'identification de ce terminal (1) et du service requis par ce terminal, une étape d'interrogation d'une base de données utilisateurs (3) afin de déterminer si le terminal identifié bénéficie du prépaiement pour le service requis, et une étape d'envoi au terminal mobile (1) d'au moins une information relative au compte de l'utilisateur pour le service prépayé requis, ce procédé étant **caractérisé en ce que** la communication entre le terminal (1) et le serveur de paiement (2) est réalisée suivant un protocole http(s), le serveur de paiement (2) interrogeant ladite base de données (3) et transmettant les informations relatives au compte de l'utilisateur en langage XML.

2. Procédé selon la revendication 1, **caractérisé en ce qu'**il comprend une étape de modification d'au moins une donnée relative au compte de l'utilisateur, cette étape de modification comprenant l'envoi par le terminal utilisateur (1) d'une requête http(s) au serveur de paiement.

3. Procédé selon la revendication 2, **caractérisé en ce que** la donnée relative au compte de l'utilisateur est choisie parmi le groupe comprenant l'adresse électronique de l'utilisateur, un mot de passe, l'historique des opérations effectuées sur le compte.

4. Système de communication, comprenant un terminal de communication mobile (1) appartenant au réseau d'un opérateur, un serveur de paiement (2) et une base de données utilisateurs (3), ce système étant **caractérisé en ce que** le terminal (1) comprend des moyens de création d'une requête à destination dudit serveur de paiement (2), le serveur (2) comprenant des moyens d'identification de ce terminal et d'un service prépayé requis par ce terminal, le serveur (2) comprenant en outre des moyens d'interrogation de la base de données utilisateurs (3) afin de déterminer si le terminal identifié bénéficie du prépaiement pour le service requis, le serveur (2) comprenant des moyens d'envoi au terminal mobile (1) d'au moins une information relative au compte de l'utilisateur pour le service prépayé requis, la communication entre le terminal (1) et le serveur de paiement (2) étant réalisée suivant un protocole HTTP, le serveur de paiement (2) interrogeant ladite base de données (3) et transmettant les informations relatives au compte de l'utilisateur en langage XML.

5. Produit programme d'ordinateur destiné à être stocké en mémoire d'un terminal de communication mobile et/ou stocké sur un support mémoire lisible par un lecteur d'un terminal mobile, et/ou téléchargeable sur un terminal de communication mobile via un serveur distant, ce programme contenant des instructions pour la mise en oeuvre du procédé selon l'une quelconque des revendications 1 à 3.
